# EUROPEAN PATENT APPLICATION

(11) **EP 4 538 419 A1**
(43) Date of publication of application: **16.04.2025**
(21) Application number: 23820146.1
(22) Date of filing: 09.06.2023
(51) Int. Cl.: C23C 28/00, C23C 28/02, C25D 5/50, C25D 9/04, C25D 9/06, C25D 3/20, C25D 7/06, C23C 2/06, C23C 2/40

(54) **STEEL SHEET HAVING EXCELLENT PLATING QUALITY AND METHOD FOR MANUFACTURING SAME**

(30) Priority: 10.06.2022 KR 20220071021
(71) Applicant: POSCO Co., Ltd, Pohang-si, Gyeongsangbuk-do 37859 (KR)
(72) Inventor: JUNG, Jin-Ho, Gwangyang-si, Jeollanam-do 57807 (KR); LEE, Won-Hwi, Gwangyang-si, Jeollanam-do 57807 (KR); KWON, Seong-Choon, Gwangyang-si, Jeollanam-do 57807 (KR); KANG, Ki-Cheol, Gwangyang-si, Jeollanam-do 57807 (KR); HAN, Seong-Ho, Gwangyang-si, Jeollanam-do 57807 (KR); LEE, Jae-Hoon, Gwangyang-si, Jeollanam-do 57807 (KR); CHOI, Yong-Hoon, Gwangyang-si, Jeollanam-do 57807 (KR)
(74) Representative: Meissner Bolte Partnerschaft mbB
(86) International application number: PCT/KR2023/007974
(87) International publication number: WO 2023/239211

(57) **Abstract**

The present invention relates to a hot-dip galvanized steel sheet having excellent plating quality, a steel sheet for plating for producing same, and a method for manufacturing same. A steel sheet for plating according to one aspect of the present invention comprises, in weight percent: 0.1-1.0% of Mn; 0.1% or less of Si (excluding 0%); 0.0005-0.03% of C; 0.005-3.0% of Al; 0.04% or less of P; 0.015% or less of S; 1.5% or less of Cr; 0.005% or less of B, and the balance being Fe and inevitable impurities, wherein each of a GDS profile of the Mn component and a GDS profile of the Si component, which are observed from the surface to the depth, sequentially includes a maximum point and a minimum point, the difference (the reduced concentration difference of Mn) between a value obtained by dividing the Mn concentration at the maximum point in the GDS profile of the Mn component by the Mn concentration of a base material, and a value obtained by dividing the Mn concentration at the minimum point in the GDS profile of the Mn component by the Mn concentration of the base material may be 10% or greater, and the difference (the reduced concentration difference of Si) between a value obtained by dividing the Si concentration at the maximum point in the GDS profile of the Si component by the Si concentration of the base material, and a value obtained by dividing the Si concentration at the minimum point in the GDS profile of the Si component by the Si concentration of the base material may be 10% or greater. If no minimum points appear within 5 um in depth, a point at a depth of 5 um is considered to be the point at which the minimum point appears.

## Description

### Technical Field

The present disclosure relates to a hot-dip galvanized steel sheet having excellent plating quality, a steel sheet for plating to manufacture the same, and a method for manufacturing the same.

### Background Art

In the case of exterior automobile panels, hot-dip galvanizing is often performed on the surface to secure corrosion resistance, but there is concern that problems with plating may occur for the following reasons.

That is, hot-dip galvanizing determines the plating quality according to the surface condition of the annealed steel plate immediately before plating is performed, but the plating quality may deteriorate due to the formation of surface oxides during annealing caused by elements such as Mn, Si, Al, Cr, B and the like added to secure the physical properties of the steel plate. That is, during the annealing process, the elements diffuse toward the surface and react with trace amounts of oxygen or water vapor present in the annealing furnace to form the elements alone or composite oxides on the surface of the steel plate, thereby reducing the reactivity of the surface. The annealed steel plate surface with reduced reactivity may interfere with the wettability of the hot-dip galvanizing bath, causing unplating where the plating metal is not attached locally or completely to the surface of the plating steel plate, and also, due to these oxides, the formation of an alloying inhibitor layer (Fe₂Al₅) necessary for securing plating layer adhesion during the hot-dip galvanizing process is insufficient, resulting in plating layer peeling, or the like, which significantly reduces the plating quality of the plating steel plate.

Various technologies have been proposed to improve the plating quality of hot-dip plated steel sheets. Thereamong, Patent Document 1 proposes a technology to control the air-fuel ratio of air and fuel to 0.80 to 0.95 during the annealing process, oxidize the steel sheet in a direct flame furnace in an oxidizing atmosphere, form iron oxides comprising Si, Mn, or Al alone or composite oxides to a certain depth inside the steel sheet, and then perform reduction annealing of the iron oxides in a reducing atmosphere and then perform hot-dip galvanizing, to thereby provide hot-dip galvanized or galvannealed steel sheets with excellent plating quality.

If a method of reducing after oxidation is used in the annealing process as in Patent Document 1, elements with high affinity for oxygen such as Si, Mn, Al and the like are internally oxidized to a certain depth from the surface layer of the steel sheet, thereby suppressing diffusion to the surface layer, so that the surface layer relatively contains less Si, Mn, or Al alone or composite oxides, which improves wettability with zinc and reduces unplating. However, in the case of steel grades with Si added, Si is concentrated directly below the iron oxide during the reduction process, forming a band-shaped Si oxide, which causes peeling in the surface layer portion including the plating layer, that is, peeling at the interface between the reduced iron and the base steel sheet therebelow, resulting in a problem in which it is difficult to secure adhesion of the plating layer.

Meanwhile, as another method for improving the plating properties of hot-dip plated steel sheets, Patent Document 2 proposes a method for improving the plating properties by maintaining a high dew point in the annealing furnace to internally oxidize alloy elements such as Mn, Si, Al and the like, which are easy to oxidize, inside the steel, thereby reducing oxides that are externally oxidized on the surface of the steel sheet after annealing. However, although the method according to Patent Document 2 may solve a problem of the plating properties due to external oxidation of Si, which is easy to oxidize internally, there is a problem that the effect is minimal when a large amount of Mn, which is relatively difficult to oxidize internally, is added.

In addition, even if the plating property is improved by internal oxidation, problems such as linear non-plating may occur due to surface oxides formed unevenly on the surface, or when manufacturing a galvannealed steel sheet (GA steel sheet) through alloying heat treatment after plating, linear defects may occur due to uneven alloying on the surface of the galvannealed steel sheet.

Another conventional technology is a method of performing Ni pre-plating before annealing to suppress the diffusion of alloying elements to the surface during annealing. However, this method also has a problem in that it is effective in suppressing the diffusion of Mn, but does not sufficiently suppress the diffusion of Si.

### [Prior art literature]

### [Patent literature]

(Patent literature 1) Korean Patent Publication No. 2010-0030627
(Patent literature 2) Korean Patent Publication No. 2009-0006881

### Summary of Invention

### Technical Problem

An aspect of the present disclosure is to provide a steel sheet for exterior automobile panels with excellent plating quality and a method for manufacturing the same, in which non-plating does not occur and the problem of peeling of a plating layer is solved.

Another aspect of the present disclosure is to provide a hot-dip galvanized steel sheet for exterior automobile panels, which may be manufactured as a galvannealed steel sheet with excellent surface quality without generating linear defects even when an alloying heat treatment is performed after plating, and a method for manufacturing the same.

Another aspect of the present disclosure is to provide a steel sheet for plating, for manufacturing a hot-dip galvanized steel sheet having such excellent plating quality, and a method for manufacturing the same.

The subject matter of the present disclosure is not limited to the above-described contents. Those skilled in the art to which the present disclosure pertains will have no difficulty in understanding additional subjects of the present disclosure from the general contents of the specification of the present disclosure.

### Solution to Problem

According to an aspect of the present disclosure, a steel sheet for plating comprises a composition comprising, in weight %, Mn: 0.1 to 1.0%, Si: 0.1% or less (excluding 0%), C: 0.0005 to 0.03%, Al: 0.005 to 3.0%, P: 0.04% or less, S: 0.015% or less, Cr: 1.5% or less, B: 0.005% or less, with a balance of Fe and inevitable impurities, and a GDS profile of an Mn element and a GDS profile of an Si element observed in a depth direction from a surface, respectively, sequentially including maximum points and minimum points, wherein a difference between a value obtained by dividing an Mn concentration at a maximum point of the GDS profile of the Mn element by an Mn concentration of a base material and a value obtained by dividing an Mn concentration at a minimum point of the GDS profile of the Mn element by the Mn concentration of the base material (a difference of converted concentration of Mn) is 10% or more, and a difference between a value obtained by dividing an Si concentration at a maximum point of the GDS profile of the Si element by an Si concentration of a base material and a value obtained by dividing an Si concentration at a minimum point of the GDS profile of the Si element by the Si concentration of the base material (a difference of converted concentration of Si) is 10% or more.

However, when the minimum point does not appear within a depth of 5 µm, a point at a depth of 5 µm is considered a point at which the minimum point appears.

According to another aspect of the present disclosure, a hot-dip galvanized steel sheet may comprise the steel sheet for plating described above and a hot-dip galvanized layer formed on the steel sheet for plating.

According to another aspect of the present disclosure, a method for manufacturing a steel sheet for plating may comprise: preparing a base steel sheet having a composition comprising, in wt%, Mn: 0.1 to 1.0%, Si: 0.1% or less (excluding 0%), C: 0.0005 to 0.03%, Al: 0.005 to 3.0%, P: 0.04% or less, S: 0.015% or less, Cr: 1.5% or less, B: 0.005% or less, with a balance of Fe and inevitable impurities; performing electroplating on the base steel sheet and forming an Fe plating layer containing 5 to 50 wt% of oxygen; and annealing the base steel sheet on which the Fe plating layer has been formed by maintaining at a temperature range of 600 to 950°C for 5 to 120 seconds in an annealing furnace with 1 to 70% H₂-remaining N₂ gas atmosphere, controlled at a dew point temperature of less than -20°C.

According to another aspect of the present disclosure, a method for manufacturing a hot-dip galvanized steel sheet comprises: preparing a base steel sheet having a composition comprising, in wt%, Mn: 0.1 to 1.0%, Si: 0.1% or less (excluding 0%), C: 0.0005 to 0.03%, Al: 0.005 to 3.0%, P: 0.04% or less, S: 0.015% or less, Cr: 1.5% or less, B: 0.005% or less, with a balance of Fe and inevitable impurities; performing electroplating on the base steel sheet and forming an Fe plating layer containing 5 to 50 wt% of oxygen; obtaining a steel sheet for plating by annealing the base steel sheet on which the Fe plating layer has been formed by maintaining at a temperature range of 600 to 950°C for 5 to 120 seconds in an annealing furnace in an atmosphere of 1 to 70% H₂-remaining N₂ gas, controlled at a dew point temperature of less than -20°C; and dipping the steel sheet for plating in a zinc plating bath.

### Advantageous Effects of Invention

As described above, the present disclosure may provide a hot-dip galvanized steel sheet that significantly improves the phenomenon of unplating occurring during hot-dip galvanizing and enhances plating adhesion by forming a pre-plating layer and controlling the concentration profile of the Mn and Si elements therein.

In addition, according to one aspect of the present disclosure, linear defects or the like on the surface of the galvannealed steel sheet obtained even if alloying heat treatment is performed on a hot-dip galvanized steel sheet of the present disclosure, may be prevented, thereby providing a galvannealed steel sheet with excellent surface quality.

### Brief Description of Drawings

FIG. 1 is a schematic diagram of a GDS profile of Mn and Si elements measured after removing a plating layer of a hot-dip galvanized steel sheet manufactured from an Fe electroplated cold-rolled steel sheet.
FIG. 2 is a schematic diagram illustrating an annealing process of a base steel sheet on which an oxygen-containing Fe plating layer has been formed.

### Best Mode for Invention

Hereinafter, a hot-dip galvanized steel sheet having excellent plating quality according to one aspect of the present disclosure completed through the research of the present inventor will be described in detail. It should be noted that when indicating the concentration of each element in the present disclosure, unless otherwise specified, it means weight %. In addition, the Fe electroplating amount is a plating amount measured as the total amount of Fe contained in the plating layer per unit area, and oxygen and inevitable impurities in the plating layer are not included in the plating amount.

In addition, unless otherwise defined, the concentration and concentration profile mentioned in the present disclosure mean the concentration and concentration profile measured using GDS, for example, a glow discharge optical emission spectrometer.

Hereinafter, the present disclosure will be described in detail.

It is known that the cause of the non-plating and the deterioration of plating adhesion in steel sheets containing Mn and Si is due to the surface oxides that are formed when alloying elements such as Mn, Si and the like are oxidized on the surface during the high-temperature annealing process of cold-rolled steel sheets.

To suppress the diffusion of alloying elements such as Mn, Si and the like to the surface, as a method of forming an oxide layer containing a large amount of oxygen, an oxidation-reduction method of oxidizing during temperature elevation and then again maintaining it in a reducing atmosphere to reduce it, a method of coating iron oxide on the surface of the base metal and performing heat treatment, or the like, may be used. However, the iron oxide firmly formed on the surface of the base metal is a mixture of not only FeO but also Fe₃O₄ and Fe₂O₃ that are difficult to reduce, and while the surface is reduced to metallic iron during the annealing process in a reducing atmosphere, the iron oxide layer and the base steel sheet interface are difficult to completely reduce because the reduction rate is slow, and Mn and Si oxides accumulate at the interface to form a continuous oxide layer, and thus although the wettability with molten zinc is improved, the oxide layer may easily crumble and the plating layer may peel off, which may cause a problem.

Meanwhile, in the case of applying the internal oxidation method at annealing that increases the oxygen partial pressure or dew point in the annealing furnace during the heat treatment process to oxidize alloy elements such as Mn, Si and the like inside the steel, Mn and Si oxides are preferentially formed on the surface of the steel during the heat treatment process, and then the oxygen diffused inside the steel causes the Mn and Si to be oxidized, thereby inhibiting surface diffusion. Therefore, a thin oxide film is formed on the surface of the base steel, and if the surface of the cold-rolled steel sheet before annealing is not completely homogeneous, or if there is a local deviation in the oxygen partial pressure, temperature, or the like, the wettability is uneven during hot-dip galvanizing, resulting in non-plating, or if the thickness of the oxide film is uneven during the alloying heat treatment process after zinc plating, resulting in a difference in the alloying, there is a tendency for linear defects that may be easily identified with the naked eye to occur.

To solve the problems of the above technology, the inventors of the present disclosure attempted to manufacture a hot-dip galvanized steel sheet having a beautiful surface and no plating peeling problem by controlling the form of presence of oxidizing elements, Mn and Si, on the surface of the steel sheet for plating as follows.

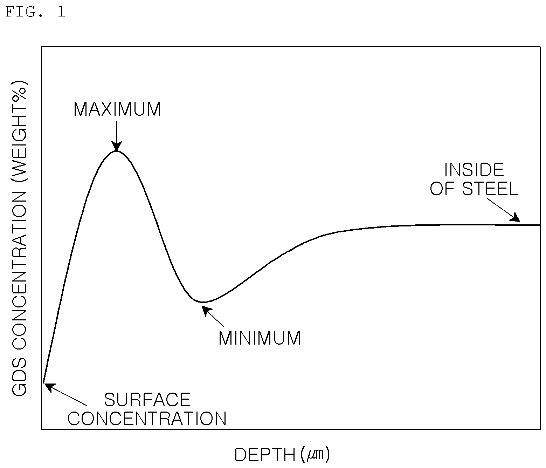

That is, the steel sheet according to an embodiment of the present disclosure may have the following characteristics of the GDS concentration profile of Mn and Si. The steel sheet for plating of the present disclosure will be described in detail with reference to the GDS profile of FIG. 1.

FIG. 1 is a graph schematically illustrating a typical GDS profile of an alloy element that may appear from the surface after the zinc plating layer is removed from a hot-dip galvanized steel sheet including the steel sheet of the present disclosure and a GDS profile of an alloy element in a case outside the scope of the present disclosure. In the graph, the vertical axis represents the concentration of alloy elements such as Mn, Si and the like, and the horizontal axis represents the depth.

As can be seen from the typical example of the GDS profile of the Mn element of the present disclosure illustrated in FIG. 1, the steel sheet of the present disclosure has a very low concentration of Mn on the surface thereof, and may have a concentration gradient in the form of a maximum point and a minimum point sequentially appearing in the depth direction from the surface. In this case, the term "sequentially" does not necessarily mean that the maximum point appears first in the depth direction from the surface (interface), and in some cases, the minimum point may appear first, but it means that the maximum point and the minimum point should appear sequentially thereafter. However, in some implementation examples, the minimum point may not appear, and in this case, the internal concentration in the 5 µm deep region may be the minimum point concentration. In addition, the alloying element concentration on the surface may have a lower value than the concentration at the maximum point, but in some cases, a minimum point with a low alloying element concentration may appear between the surface and the maximum point.

In the GDS concentration profile illustrated in FIG. 1, although not necessarily limited thereto, the surface layer corresponds to an Fe plating layer in which the alloying elements are not largely diffused from the base steel sheet and thus the concentration of alloying elements is low, the maximum point corresponds to an area where the internal oxide of the alloying elements formed near the interface between the Fe plating layer and the base steel sheet is concentrated, and the minimum point that appears on the base steel sheet side of the Fe plating layer corresponds to an area where the alloying elements are diffused and diluted into the Fe plating layer that does not contain the alloying elements, or an area where the alloy elements diffuse and are depleted to the maximum point where internal oxidation occurred.

In an embodiment of the present disclosure, the maximum point may be formed at a depth of 0.05 to 1.0 µm from the surface of the steel sheet. If the maximum point appears in a region deeper than this, it may not be determined to be a maximum point due to the effect of the present disclosure. In addition, the minimum point may be formed at a location within a depth of 5 µm from the surface of the steel sheet. As described above, if the minimum point is not formed at a point within 5 µm of the depth, the 5 µm depth may be considered as the point where the minimum point is formed. Since the concentration at the 5 µm depth is substantially the same as the concentration of the base material, it may be considered as the point where the concentration no longer decreases.

At this time, the greater the difference between the conversion concentration of the maximum point of the corresponding element (the value obtained by dividing the concentration of the corresponding point by the concentration of the base material, expressed in % units) and the conversion concentration of the minimum point in the Mn concentration profile and the Si concentration profile, the more Mn and Si diffused to the surface may be reduced, and therefore it is important. In an embodiment of the present disclosure, the conversion concentration of the maximum point of Mn and Si - the conversion concentration of the minimum point may be a value of 10% or more each.

As a result of experiments conducted by the present inventors under various conditions, when the above conditions are satisfied, a hot-dip galvanized steel sheet with good plating adhesion and no unplating during hot-dip galvanizing may be obtained. However, if the difference between the maximum and minimum converted concentrations of Mn and Si is less than 10%, there may be a problem that point or linear non-plating or plating peeling occurs. That is, by controlling the difference of converted concentration to a certain level or more, formation of oxides of Mn and Si on the surface may be prevented from occurring, so that a hot-dip galvanized steel sheet having a beautiful surface and good plating adhesion may be manufactured, and even if a subsequent alloying heat treatment process is performed, the occurrence of defects such as linear defects on the surface may be suppressed. Since a larger difference of converted concentration value is advantageous, there is no need to necessarily set an upper limit for the value. However, considering the content of the included elements, the difference of converted concentration value may be set to 200% or less for both Mn and Si. In another embodiment of the present disclosure, the difference of converted concentration of Mn and Si may be 15% or more or 20% or more.

Hereinafter, the GDS analysis method implemented in the present disclosure will be described in detail.

For GDS concentration analysis, the hot-dip galvanized steel sheet is sheared to a size of 30 to 50 mm in length and immersed in a 5 to 10 wt% hydrochloric acid solution at room temperature of 20 to 25°C, thereby removing the zinc plating layer. To prevent damage to the surface of the base steel sheet during the process of dissolving the zinc plating layer, the acid solution is removed within 10 seconds when the bubble generation due to the reaction between the zinc plating layer and the acid solution stops, and the base steel sheet is washed and dried using pure water. Of course, if it is a plated steel sheet that has not yet been hot-dip galvanized, it may be analyzed without removing the plating layer.

In the GDS concentration profile, the concentration of all elements contained in the steel sheet every 1 to 5 nm in the direction of the thickness of the steel sheet is measured. The measured GDS profile may include irregular noise, and to calculate the maximum and minimum points of the Mn and Si concentrations, a Gaussian filter with a cutoff value of 100 nm was applied to the measured concentration profile to obtain an average concentration profile, and the concentration values and depths of the maximum and minimum points of the concentrations were obtained from the profiles from which the noise was removed, respectively. In addition, it should be noted that the maximum and minimum points mentioned in the present disclosure were calculated as maximum and minimum points only when there was a difference of 10 nm or more in the depth direction.

The steel sheet for plating targeted in the present disclosure may comprise a base steel sheet and an Fe plating layer formed on the base steel sheet. The base steel sheet is not particularly limited in the composition thereof.

However, if the steel sheet contains 0.1 to 1.0 wt% of Mn and 0.1 wt% or less of Si (excluding 0%) and has a composition that easily forms oxides on the surface, the plating property may be advantageously improved by the present disclosure. The upper limit of the Mn concentration in the base steel sheet is not particularly limited, but considering the commonly used composition, the upper limit may be limited to 1.0 wt%. In addition, the lower limit of the Mn concentration is not particularly limited, but if the composition contains Mn of less than 0.1 wt%, the surface quality of the hot-dip galvanized steel sheet is beautiful even if an Fe plating layer is not formed, and thus Fe electroplating does not necessarily have to be performed. In the component system of the present disclosure, Si is an element that may contribute to oxide formation and deteriorate the plating quality even if added in a small amount, and therefore, considering the strict surface quality requirements of the exterior automobile panel, the upper limit of the content thereof may be set to 0.1 wt%. When considering only the aspect of oxide formation, it is advantageous to not add Si, and thus there is no need to necessarily set a lower limit, but considering the limitations in the industrial production process, the lower limit of the Si content may be limited to 0.001%.

Since the Mn and Si are elements that affect the plating property, the concentrations thereof may be limited as described above, but the present disclosure does not specifically limit the remaining elements of the base steel sheet.

However, considering the aspect that in the case of a steel sheet containing an alloy element, non-plating and deterioration of plating adhesion may occur severely, in an embodiment of the present disclosure, the composition of the base steel sheet may be set to comprise, in wt%, Mn: 0.1 to 1.0%, Si: 0.1% or less (excluding 0%), C: 0.0005 to 0.03%, Al: 0.005 to 3.0%, P: 0.04% or less, S: 0.015% or less, Cr: 1.5% or less, B: 0.005% or less, with a balance of Fe and inevitable impurities. It is advantageous that P and S are not added as impurities, and Cr and B are optional elements that may not be added, so no lower limit is set separately. In addition to the elements described above, the base steel sheet may further comprise elements such as Ti, Mo, Nb and the like, in a total amount of 1.0% or less. In addition, in another embodiment of the present disclosure, the C element may be further limited to less than 0.02%, and in another embodiment, the C element may be further limited to 0.0199% or less. The base steel sheet is not particularly limited, but in an embodiment of the present disclosure, a cold-rolled steel sheet or a hot-rolled steel sheet may be used as the base steel sheet.

In one aspect of the present disclosure, a hot-dip galvanized steel sheet comprising the steel sheet for plating may be provided, and the hot-dip galvanized steel sheet may comprise the steel sheet for plating and a hot-dip galvanized layer formed on a surface of the steel sheet for plating. At this time, any commercially available hot-dip galvanized steel sheet may be used, and the type thereof is not particularly limited.

Next, an illustrative embodiment of a method for manufacturing a steel sheet for plating and a hot-dip galvanized steel sheet having the advantageous effects described above will be described. According to an embodiment of the present disclosure, the steel sheet for plating may be manufactured by a process comprising operations of: preparing a base steel sheet; performing electroplating on the base steel sheet to form an Fe plating layer containing 5 to 50 wt% of oxygen; and obtaining a steel sheet for plating by annealing the base steel sheet on which the Fe plating layer is formed.

After electroplating of Fe containing 6.5 wt% of oxygen so that the iron adhesion amount becomes 1.97 g/m² on a cold-rolled steel sheet containing 0.5% of manganese, 0.05% of silicon, and other alloying elements, the electroplated cold-rolled steel sheet was annealed in an atmosphere of N₂-5% H₂, a dew point of -40°C, and a temperature of 800°C for 53 seconds, and then cooled. The atmosphere was maintained equally throughout the annealing process, and when a sample was collected from the cooled steel sheet and the cross-section thereof was observed using a transmission electron microscope, it was confirmed that Mn and Si oxides in the form of particles were formed at the interface between the iron electroplated layer and the base steel sheet, whereas almost no Mn and Si oxides were formed on the surface of the electroplated layer. In particular, when analyzing this state with a GDS profile, as illustrated in FIG. 1, the maximum values of the Mn and Si concentrations appear immediately below the surface of the steel sheet (comprising the Fe plating layer), and the minimum values of the Mn and Si concentrations may appear at a deeper location. Of course, in some cases, the minimum value may not appear clearly, and the concentration may show a tendency to gradually decrease, but the maximum value may be clearly observed.

This phenomenon is because an Fe plating layer with a high oxygen content was formed before annealing. That is, when the iron electroplating layer contains 5 to 50 wt% of oxygen, when annealed in a reducing atmosphere annealing furnace, the oxygen in the iron electroplating layer oxidizes alloy elements such as Mn, Si and the like that diffuse from the inside of the base steel sheet to the surface and accumulates the same at the interface between the iron electroplating layer and the base steel sheet. Therefore, when measuring the concentration with GDS as illustrated in the graph of FIG. 1, a maximum point with high concentration of Mn, Si, and the like is confirmed at a depth corresponding to the thickness of the iron electroplating layer from the surface. On the other hand, alloy elements with slow diffusion rates, such as Mn and the like, cannot diffuse quickly from the base steel sheet even when the concentration is diluted by the iron electroplating layer or the Mn that has been dissolved is depleted due to internal oxidation, and thus a minimum point may exist after the GDS concentration maximum point. However, Si rapidly diffuses from the inside during the annealing process, and since internal oxidation continues at the interface between the iron electroplating layer and the base steel sheet, oxides accumulate, and thus a minimum point may not be identified in the GDS concentration analysis. Therefore, the absence of a minimum point in the GDS concentration profile means that alloy elements such as Mn, Si and the like are oxidized by the iron electroplating layer and the diffusion thereof to the surface is effectively suppressed.

Unlike oxides that are firmly formed at high temperatures, when an iron electroplating layer containing a large amount of oxygen is formed and annealed, reduction occurs simultaneously not only on the surface of the iron electroplating layer but also at the interface between the iron electroplating layer and the base steel sheet. At this time, the reduced iron is mutually diffused and bonded with the base steel sheet, and the Mn and Si react with the oxygen present in the Fe plating layer to form oxides in the form of particles or discontinuous plates at the interface between the iron electroplating layer and the base steel sheet, so that the adhesion between the iron electroplating layer and the base metal may be maintained well. In addition, the uniformly formed iron electroplating layer suppresses the formation of surface oxides and reduces the concentration of alloying elements such as Mn, Si and the like dissolved in the surface of the steel sheet, thereby promoting the alloying reaction with the zinc plating layer, so that a uniformly galvannealed steel sheet without surface defects may be obtained.

Unlike the redox method, the internal oxidation method at annealing does not form a layered oxide layer, so it exhibits excellent characteristics in improving the plating adhesion during hot-dip galvanizing of steel sheets containing alloying elements such as Mn, Si and the like. However, since the water vapor inside the annealing furnace inevitably oxidizes the surface of the steel sheet first and then oxygen penetrates inside thereof, the surface oxide cannot be fundamentally removed. As a result, if the surface of the cold rolled steel sheet before annealing is not completely homogeneous, or if local deviations in oxygen partial pressure, temperature, or the like occur during annealing, the wettability with the molten plating solution may be uneven, resulting in non-plating, or the thickness of the oxide film may be uneven during the alloying heat treatment after zinc plating, resulting in a difference in alloying, which may cause linear defects that are easily identifiable with the naked eye.

To manufacture a beautiful hot-dip galvanized steel sheet with no plating peeling problem by suppressing the surface diffusion of alloy elements by Fe plating containing a large amount of oxygen, it is preferable to form an Fe plating layer on the base steel sheet so that an iron electroplating layer containing 5 to 50 wt% of oxygen becomes 0.5 to 3.0 g/m² based on the iron adhesion amount, and to perform hot-dip plating by heating to a temperature of 600 to 950°C so that the mechanical properties of the steel sheet may be secured, and then cooling again.

In an embodiment of the present disclosure, the Fe plating layer may be formed through a continuous plating process, and the Fe plating amount at this time may be 0.5 to 3.0 g/m² based on the Fe adhesion amount. If the Fe plating amount is less than 0.5 g/m², the effect of suppressing the diffusion of alloy elements by the Fe plating layer in a normal continuous annealing process may be insufficient. In addition, even if it exceeds 3.0 g/m², the suppression effect of the alloy element may increase further, but to secure a high plating amount, multiple plating cells should be operated, and in the case in which an insoluble anode is used, the electroplating solution becomes rapidly acidified, which reduces the plating efficiency and causes a problem in which sludge is generated, which is uneconomical. In another embodiment of the present disclosure, the Fe plating amount may be 1.0 to 2.0 g/m². When internal oxidation is performed after forming the Fe plating layer, an internal oxide is formed at the interface between the Fe plating layer and the base steel sheet or directly below the interface, so that the maximum points of the Mn and Si concentrations exist in the range of 0.05 to 1.0 µm. The Fe plating amount of 0.5 to 3.0 g/m² of the present disclosure may correspond to a thickness of 0.05 to 0.4 µm after annealing.

In addition, the Fe plating layer having the high oxygen concentration described above controls the temperature, dew point temperature, and atmosphere of the subsequent annealing process so that the maximum and minimum points are formed in the GDS concentration profile of the Mn and Si elements inside the steel sheet for plating, and the conversion concentration at the maximum point and the conversion concentration at the minimum point may satisfy the numerical range limited by an embodiment of the present disclosure. Considering this, the oxygen concentration in the Fe plating layer in an embodiment of the present disclosure may be 5 to 50 wt%, and in another embodiment, may be 10 to 40 wt%. To obtain the surface oxide suppression effect, the oxygen content in the Fe plating layer should be sufficiently large. Even if the oxygen concentration in the Fe plating layer is less than 5 wt%, the surface oxide suppression effect may be obtained by increasing the Fe plating amount, but to obtain the effect as above, plating should be performed in excess of 3.0 g/m², which may cause various problems described above. In addition, since it is difficult to sequentially form maximum points and minimum points in the GDS profile of Mn and Si when the oxygen content is less than 5 wt%, in an embodiment of the present disclosure, the oxygen content in the Fe plating layer is controlled to 5 wt% or more. Meanwhile, as the oxygen concentration in the Fe plating layer increases, the surface oxide suppression effect during annealing may be further increased, but since it is difficult to obtain a plating layer exceeding 50 wt% using a general electroplating method, the upper limit may be limited to 50 wt%. In another embodiment of the present disclosure, the oxygen concentration in the Fe plating layer may be limited to 10 to 40%.

In an embodiment of the present disclosure, the annealing temperature may be 600°C to 950°C based on the steel plate temperature in the soaking section. If the annealing temperature is too low, the cold rolled steel sheet structure does not recover and recrystallize properly, and thus it is difficult to secure mechanical properties such as strength, elongation and the like of the steel sheet, and if it exceeds 950°C, alloying elements in the steel rapidly diffuse to the surface, resulting in poor hot-dip galvanizing quality, and it is uneconomical because it requires unnecessary high-temperature operation.

Meanwhile, in an embodiment of the present disclosure, the dew point inside the annealing furnace is not necessarily limited thereto, but may be less than -20°C. When the dew point temperature is maintained at less than -20°C, a separate humidifying device is not required to increase the dew point, which is economical. In addition, in the case of the present disclosure, since an Fe plating layer having a high oxygen concentration is formed, even if internal oxidation by the atmosphere is not necessarily induced, the diffusion of alloy elements such as Mn, Si and the like to the surface may be sufficiently prevented. The lower limit of the dew point temperature is not specifically determined. However, since maintaining the dew point at less than -90°C may not be industrially advantageous, such as using a very high-purity gas, or the like, the lower limit of the dew point may be set to -90°C in consideration of this. According to another embodiment of the present disclosure, the dew point when the temperature of the steel sheet is 600 to 950°C may be -70 to -30°C.

In addition, to prevent oxidation of the base steel sheet and the Fe plating layer during annealing, the hydrogen concentration in the atmosphere gas during annealing may be set to 1% or more in volume%. If the hydrogen concentration is less than 1%, the trace amount of oxygen inevitably comprised in the H₂ and N₂ gases cannot be effectively oxidized and removed, which increases the oxygen partial pressure and may cause surface oxidation of the base steel sheet. On the other hand, if the hydrogen concentration exceeds 70%, there is the risk of explosion when the gas leaks, and the cost of high-hydrogen work increases, and thus the hydrogen concentration may be set to 70% or less. Except for the impure gas inevitably comprised other than the hydrogen (H₂), it may be substantially nitrogen (N₂).

In addition, according to an embodiment of the present disclosure, the holding time after reaching the target temperature during annealing may be limited to 5 to 120 seconds. To sufficiently transfer heat to the inside of the base steel sheet during annealing and obtain uniform mechanical properties in the thickness direction, it is necessary to maintain the target annealing temperature for 5 seconds or more. On the other hand, if the high-temperature annealing holding time is excessively long, the diffusion of alloying interfering elements through the Fe plating layer increases, which increases the amount of surface oxides generated, and as a result, the quality of the hot-dip galvanizing deteriorates, so it may be limited to 120 seconds or less.

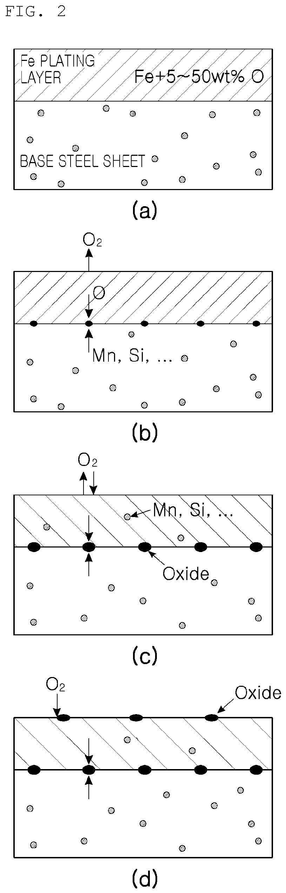

Hereinafter, the effect of suppressing the surface diffusion of Mn and Si during annealing in a high dew point atmosphere of a cold-rolled steel sheet formed with an Fe plating layer containing a large amount of oxygen based on the content described above will be described in more detail with reference to FIG. 2.

FIG. 2 schematically illustrates a phenomenon occurring inside the steel sheet as the temperature of the steel sheet is increased according to the conditions of the present disclosure.

FIG. 2(a) illustrates a cross-sectional schematic diagram of a base steel sheet formed with an Fe plating layer containing a large amount of oxygen. The base steel sheet contains alloy elements such as Mn, Si and the like, and the Fe plating layer contains 5 to 50 wt% of oxygen and impurities that are inevitably mixed during plating, with the remainder being composed of Fe.

FIG. 2(b) illustrates a state in which a cold-rolled steel sheet electroplated with iron is heated to about 300 to 500°C in a nitrogen atmosphere containing 1 to 70% H₂. The surface of the Fe plating layer is gradually reduced and oxygen is removed, and internal oxides such as Mn, Si and the like diffused from the base steel sheet begin to form at the interface between the Fe plating layer and the base steel sheet, and as the temperature increases, the oxides at the grain boundaries grow coarsely.

FIG. 2(c) illustrates a schematic cross-section of the base steel sheet when the temperature is increased to 500 to 700°C in the same reducing atmosphere. The Fe plating layer is almost completely reduced, forming ferrite with lower Mn and Si concentrations compared to the base steel sheet, and since the oxygen in the Fe plating layer is gradually depleted, Mn and Si begin to penetrate the Fe plating layer and gradually diffuse to the surface of the Fe plating layer.

FIG. 2(d) illustrates a schematic cross-sectional view of a steel sheet in which annealing has been completed at a temperature of 600 to 950°C. In the iron electroplating layer, except for internal oxides such as Mn, Si and the like, the oxygen dissolved inside the metal iron is completely removed, and the generated internal oxides generally have a spherical or short plate shape. In addition, the iron electroplating layer may form a single crystal grain with the base steel sheet due to grain growth. However, the shape of the internal oxide is not necessarily generated in the form of particles, and depending on the elongation of the cold-rolled steel sheet, the steel component, the atmosphere in the annealing furnace, and the content of oxygen contained in the iron electroplating layer, the crystal grains of the base steel sheet and the crystal grains of the iron electroplating layer may appear separately, and short linear oxides may be generated along the interface between the iron electroplating layer and the base steel sheet or the grain boundaries inside the base steel sheet.

After the annealing operation, the annealed steel sheet may be cooled. Since the cooling conditions in the cooling operation after the annealing operation do not significantly affect the surface quality of the final product, for example, the plating quality, there is no need to specifically limit the cooling conditions in the present disclosure. However, to prevent oxidation of the iron component during the cooling process, a reducing atmosphere may be applied at least to the iron.

According to an embodiment of the present disclosure, a steel sheet for plating obtained by the above-described process may be hot-dip galvanized to form a hot-dip galvanized layer. The hot-dip galvanized method is not specifically limited in the present disclosure.

In addition, in the present disclosure, since any base steel sheet having the alloy composition described above may be applied as the base steel sheet of the steel sheet for plating or the hot-dip galvanized steel sheet according to the present disclosure without limitation, the method for manufacturing the base steel sheet may not be specifically limited.

In an embodiment of the present disclosure, the Fe plating layer may be formed on the surface of the base steel sheet through an electroplating method, and the oxygen concentration of the formed Fe plating layer may be controlled by appropriately controlling the conditions of the electroplating solution and the plating conditions.

That is, to form the Fe plating layer in the present disclosure, an electroplating solution comprising iron ions comprising ferrous ions and ferric ions; a complexing agent; and inevitable impurities, and having a concentration of ferric ions of 5 to 60 wt% in the iron ions may be used.

According to an embodiment of the present disclosure, the electroplating solution comprises ferrous ions and ferric ions. To obtain high plating efficiency, it may be advantageous to comprise only ferrous ions, but if only ferrous ions are comprised, the solution is deteriorated and the plating efficiency rapidly decreases, which may cause quality deviation in the continuous electroplating process, and thus the ferric ions may be further comprised. At this time, the concentration of the ferric ions is preferably 5 to 60 wt% of the total of ferrous and ferric ions, and is more preferably 5 to 40 wt%. If it is less than 5%, the rate at which ferric ions are reduced to ferrous ions at the cathode is lower than the rate at which ferrous ions are oxidized to ferric ions at the anode, so that the ferric concentration rapidly increases, the pH rapidly decreases, and the plating efficiency continuously decreases. On the other hand, if the concentration of ferric ions exceeds 60%, the reaction amount of ferric iron reduced to ferrous iron at the cathode increases significantly more than the reaction amount of ferrous iron reduced and deposited as metallic iron, and thus the plating efficiency decreases significantly and the plating quality deteriorates. Therefore, considering the equipment and process characteristics such as the plating amount, working current density, solution supply amount, amount of solution lost by being deposited on the strip, the rate of change in concentration due to evaporation and the like, it is preferable to set the concentration of ferric ions in the iron ions to 5 to 60 wt%.

The concentration of the iron ion is preferably 1 to 80 g per 1 L of the electroplating solution, and more preferably 10 to 50 g per 1 L. If it is less than 1 g/L, there is a problem in which the plating efficiency and plating quality are rapidly reduced, while if it exceeds 80 g/L, the solubility is exceeded, which may cause precipitation, and since the loss of raw materials due to solution loss in the continuous plating process increases, it is uneconomical.

The electroplating solution of the present disclosure comprises a complexing agent, and to maintain high plating efficiency without generating sludge while containing a large amount of ferric iron, it is preferable to use an amino acid or an amino acid polymer as a complexing agent.

An amino acid refers to an organic molecule in which a carboxyl group (-COOH) and an amine group (-NH₂) are combined, and an amino acid polymer refers to an organic molecule formed by polymerization of two or more amino acids, and an amino acid polymer exhibits complexing properties similar to amino acids. Therefore, in the following description, amino acids and amino acid polymers are collectively referred to as amino acids.

When amino acids are dissolved in neutral water, the amine combines with hydrogen ions to have a positive charge, and the carboxyl group dissociates the hydrogen ion to have a negative charge, and thus the amino acid molecule maintains a neutral charge. On the other hand, when the solution is acidified, the carboxyl group recombines with hydrogen ions to become charge neutral, and since the amine has a positive charge, the amino acid molecule forms a cation. In detail, amino acids form charge neutrality or cations in a weakly acidic aqueous solution.

When amino acids are added to an acidic electrolyte containing iron ions, they are complexed with ferrous ions and ferric ions, and the iron ions complexed with the amino acid maintain a cation state even in the complexed state. Therefore, they exhibit electrically opposite characteristics to general complexing agents with multiple carboxyl groups, which have a negative charge in a weakly acidic aqueous solution.

In addition, amino acids have fewer bonds and weaker bonding strength with iron ions than complexing agents containing multiple carboxyl groups such as citric acid, EDTA and the like, but their bonding strength with ferric ions that generate sludge is sufficiently strong, and thus precipitation by ferric ions may be prevented. In addition, even if ferric ions are complexed, since cations may be maintained, ferric ions may be easily transferred to the cathode and reduced to ferrous ions to participate in the plating reaction, while their movement to the anode is suppressed, and thus the production speed of ferric ions is slowed down. Therefore, even if continuous plating is performed for a long period of time, the ferric ion concentration is maintained at a certain level, the plating efficiency is maintained constant, and there is no need to replace the electrolyte.

Meanwhile, when iron ions in the solution are exhausted by plating in the continuous electroplating process, the solution becomes acidic, and even if the same amount of iron ions is precipitated, the pH change of the solution containing ferric ions together is reduced compared to the solution containing only ferrous ions. As the pH increases, some of the ferric ions combine with the hydroxide ions, and as the pH decreases, the hydroxide ions are separated and neutralized. Therefore, a solution containing ferric ions acts as a pH buffer by slowing down the pH change even without a separate pH buffer, so that the electroplating efficiency may be maintained constant in a continuous electroplating process.

Therefore, by using amino acids as a complexing agent, sludge may be prevented, and not only ferrous ions but also ferric ions may be used as plating raw materials, and when ferrous ions and ferric ions are mixed and used, the pH change of the solution may be slowed down, and the accumulation of ferric ions may be easily prevented, so that the electroplating efficiency and plating quality may be maintained constant in the continuous electroplating process.

Meanwhile, the complexing agent is preferably added in an amount in which the molar concentration ratio of the iron ions and the complexing agent is 1: 0.05 to 2.0, and more preferably added in an amount to be 1: 0.5 to 1.0. If it is less than 0.05, the ferric ions contained in excess cannot be suppressed from combining with hydroxide ions or oxygen to form sludge, and even if ferric ions are not included, the plating efficiency is greatly reduced, and furthermore, burning is induced, which worsens the plating quality. On the other hand, even if it exceeds 2.0, the sludge suppression effect and plating quality are maintained, but the overvoltage increases, reducing the plating efficiency, and since the amino acid, which is relatively expensive compared to raw materials containing iron ions such as iron sulfate or the like, is unnecessarily included in excess, the raw material cost increases, which is uneconomical.

It is preferable that the complexing agent is at least one selected from amino acids or amino acid polymers, and for example, it may be at least one selected from alanine, glycine, serine, threonine, arginine, glutamine, glutamic acid, and glycylglycine.

When the amino acid is used as the complexing agent and electroplating is performed at a current density of 3 to 120 A/dm² while maintaining the solution temperature at 80°C or lower and pH at 2.0 to 5.0, a Fe plating layer having high plating efficiency and high oxygen concentration may be obtained.

The temperature of the Fe electroplating solution does not significantly affect the quality of the Fe plating layer, but if it exceeds 80°C, the evaporation of the solution becomes severe, so that the concentration of the solution continuously changes, and thus it is difficult to obtain uniform electroplating.

If the pH of the Fe electroplating solution is less than 2.0, the electroplating efficiency decreases, making it unsuitable for a continuous plating process, and if the pH exceeds 5.0, the plating efficiency increases, but sludge is generated in which iron hydroxide is precipitated during continuous electroplating, causing problems such as pipe clogging, roll and equipment contamination.

If the current density is less than 3A/dm², the plating overvoltage of the cathode decreases, so that the Fe electroplating efficiency decreases, making it unsuitable for a continuous plating process, and if it exceeds 120A/dm², burning occurs on the plating surface, making the electroplating layer uneven, and causing a problem such as the Fe plating layer easily falling off.

As described above, in the present disclosure, it is preferable to contain 5 to 50 wt% of oxygen in the Fe plating layer. The cause of oxygen incorporation into the Fe plating layer is as follows. In the process of precipitating iron on the surface of the steel plate to which the cathode has been applied, hydrogen ions are simultaneously reduced to hydrogen gas, thereby increasing the pH. Therefore, both ferrous and ferric ions temporarily combine with OH⁻ ions, and may be incorporated together when the Fe plating layer is formed. If an anionic complexing agent such as acetic acid, lactic acid, citric acid, EDTA or the like is used, the iron ions in which the complexing agent combined with the OH⁻ ions have an average negative charge, and when the cathode is applied for electroplating, an electrical repulsion occurs, suppressing incorporation into the Fe plating layer. On the other hand, amino acids are electrically neutral at pH 2.0 to 5.0, and become cations in strong acids with pH of lower than 2.0, and even if 1 to 2 OH⁻ ions are combined with the iron ions combined with the amino acids, they have cations, and thus an electrical attraction occurs with the cathode performing electroplating, causing a large amount of oxygen to be incorporated. Therefore, when an amino acid is used as a complexing agent so that the molar concentration ratio of iron ions and amino acids is 1:0.05 to 1:2.0 and Fe electroplating is performed while maintaining the pH at 2.0 to 5.0, an Fe plating layer having high plating efficiency, suppressing sludge generation, and containing 5 to 50 wt% of oxygen may be obtained.

To secure the quality of hot-dip galvanizing of steel sheets containing Mn and Si, it is preferable that the plating amount of the Fe plating layer be 0.5 to 3.0 g/m² based on the iron concentration. The upper limit of the Fe plating amount is not specifically limited, but if it exceeds 3.0 g/m² in a continuous plating process, multiple plating cells are required or the production speed decreases, which is uneconomical. In addition, if the Fe electroplating amount is large, the Fe electroplating solution is rapidly denatured in the continuous process, causing a decrease in pH and a significant decrease in plating efficiency, which makes solution management difficult. On the other hand, if the Fe electroplating amount is less than 0.5 g/m², the oxygen contained in the Fe plating layer is rapidly reduced and removed, so that Mn and Si diffuse from the base steel sheet and the formation of surface oxides are not effectively suppressed, which causes a problem of deterioration in the hot-dip galvanizing quality. The Fe plating amount is the iron concentration contained in the plating layer, and when the Fe plating layer is completely reduced during annealing, it has a thickness of about 0.05 to 0.4 µm.

## Claims

1. A steel sheet comprising:
a composition comprising, in weight %, Mn: 0.1 to 1.0%, Si: 0.1% or less (excluding 0%), C: 0.0005 to 0.03%, Al: 0.005 to 3.0%, P: 0.04% or less, S: 0.015% or less, Cr: 1.5% or less, B: 0.005% or less, with a balance of Fe and inevitable impurities, and
a GDS profile of an Mn element and a GDS profile of an Si element observed in a depth direction from a surface, respectively, sequentially including maximum points and minimum points,
wherein a difference between a value obtained by dividing an Mn concentration at a maximum point of the GDS profile of the Mn element by an Mn concentration of a base material and a value obtained by dividing an Mn concentration at a minimum point of the GDS profile of the Mn element by the Mn concentration of the base material (a difference of converted concentration of Mn) is 10% or more, and
a difference between a value obtained by dividing an Si concentration at a maximum point of the GDS profile of the Si element by an Si concentration of a base material and a value obtained by dividing an Si concentration at a minimum point of the GDS profile of the Si element by the Si concentration of the base material (a difference of converted concentration of Si) is 10% or more,
wherein when the minimum point does not appear within a depth of 5 µm, a point at a depth of 5 µm is considered a point at which the minimum point appears.

2. The steel sheet of claim 1, wherein the steel sheet comprises a base steel sheet and an Fe plating layer formed on a surface of the base steel sheet, and the surface is a surface of the Fe plating layer.

3. The steel sheet of claim 1, wherein the difference of converted concentration of Mn is 15% or more, and the difference of converted concentration of Si is 15% or more.

4. The steel sheet of claim 1, wherein a depth at which the maximum point is formed is 0.05 to 1.0 µm.

5. A hot-dip galvanized steel sheet comprising the steel sheet of claims 1 to 4 and a hot-dip galvanized layer formed on the steel sheet.

6. A method for manufacturing a steel sheet, comprising:
preparing a base steel sheet having a composition comprising, in wt%, Mn: 0.1 to 1.0%, Si: 0.1% or less (excluding 0%), C: 0.0005 to 0.03%, Al: 0.005 to 3.0%, P: 0.04% or less, S: 0.015% or less, Cr: 1.5% or less, B: 0.005% or less, with a balance of Fe and inevitable impurities;
performing electroplating on the base steel sheet and forming an Fe plating layer containing 5 to 50 wt% of oxygen; and
annealing the base steel sheet on which the Fe plating layer has been formed by maintaining at a temperature range of 600 to 950°C for 5 to 120 seconds in an annealing furnace with 1 to 70% H₂-remaining N₂ gas atmosphere, controlled at a dew point temperature of less than -20°C.

7. The method for manufacturing a steel sheet of claim 6, wherein an adhesion amount of the Fe plating layer is 0.5 to 3 g/m².

8. The method for manufacturing a steel sheet of claim 6 or 7, wherein the complexing agent is at least one selected from alanine, glycine, serine, threonine, arginine, glutamine, glutamic acid, and glycylglycine.

9. The method for manufacturing a steel sheet of claim 6 or 7, wherein the electroplating solution contains ferrous ions and ferric ions, the ferric ions have a ratio of 5 to 60 wt% relative to total iron ions, and a total concentration of the iron ions is 1 to 80 g per 1 L of the electroplating solution.

10. The method for manufacturing a steel sheet of claim 6 or 7, wherein the electroplating is performed under conditions of a solution temperature of 80°C or lower and a current density of 3 to 120 A/dm².

11. A method for manufacturing a hot-dip galvanized steel sheet, comprising:
preparing a base steel sheet having a composition comprising, in wt%, Mn: 0.1 to 1.0%, Si: 0.1% or less (excluding 0%), C: 0.0005 to 0.03%, Al: 0.005 to 3.0%, P: 0.04% or less, S: 0.015% or less, Cr: 1.5% or less, B: 0.005% or less, with a balance of Fe and inevitable impurities;
performing electroplating on the base steel sheet and forming an Fe plating layer containing 5 to 50 wt% of oxygen;
obtaining a steel sheet for plating by annealing the base steel sheet on which the Fe plating layer has been formed by maintaining at a temperature range of 600 to 950°C for 5 to 120 seconds in an annealing furnace in an atmosphere of 1 to 70% H₂-remaining N₂ gas, controlled at a dew point temperature of less than -20°C; and
dipping the steel sheet for plating in a zinc plating bath.
